# EUROPÄISCHE PATENTSCHRIFT

(11) **EP 2 567 456 B1**
(45) Veröffentlichungstag und Bekanntmachung des Hinweises auf die Patenterteilung: **10.02.2016**
(21) Anmeldenummer: 11715655.4
(22) Anmeldetag: 24.03.2011
(51) Int. Cl.: H02P 6/14, H02P 6/08

(54) **VERFAHREN UND STEUERVORRICHTUNG ZUM BETREIBEN EINES DREIPHASIGEN BÜRSTENLOSEN GLEICHSTROMMOTORS**
METHOD AND CONTROL DEVICE FOR OPERATING A THREE-PHASE BRUSHLESS DIRECT CURRENT MOTOR
PROCÉDÉ ET DISPOSITIF DE COMMANDE POUR FAIRE FONCTIONNER UN MOTEUR À COURANT CONTINU TRIPHASÉ SANS BALAI

(30) Priorität: 06.05.2010 DE 102010019494
(43) Veröffentlichungstag der Anmeldung: 13.03.2013
(73) Patentinhaber: Brose Fahrzeugteile GmbH & Co. Kommanditgesellschaft, Hallstadt, 96103 Hallstadt (DE)
(72) Erfinder: DORNER, Thomas, 90461 Nürnberg (DE); GROTH, Jürgen, 90451 Nürnberg (DE); ENGELHARDT, Heiko, 90403 Nürnberg (DE)
(74) Vertreter: FDST Patentanwälte
(86) Internationale Anmeldenummer: PCT/EP2011/001492
(87) Internationale Veröffentlichungsnummer: WO 2011/137948

(56) Entgegenhaltungen:
- EP-A1- 1 734 648
- WO-A1-2005/048444
- US-A1- 2007 075 662

## Beschreibung

Die Erfindung betrifft ein Verfahren und eine Steuervorrichtung zum Betreiben eines dreiphasigen bürstenlosen Gleichstrommotors, dessen Phasenwicklungen von einem an eine Spannungsquelle mit einem Hochpotential und mit einem Niederpotential angeschlossenen Wechselrichter gespeist werden, dessen in Brückenschaltung angeordnete Halbleiterschalter derart angesteuert werden, dass im Motorbetrieb stets zwei Phasenwicklungen bestromt sind. Ein derartiges Verfahren ist beispielsweise aus der US 2007/0075662 A1, aus der EP 1 734 648 A1 und aus der WO 2005/048444A1 bekannt.

Üblicherweise weist ein bürstenloser Gleichstrommotor einen Rotor (Anker) mit Permanentmagneten und eine dreiphasige Wicklung in Stern- oder Dreieckschaltung auf, die den festen Stator bildet. Wird die Wicklung geeignet bestromt, so erzeugt diese ein lageabhängiges Magnetfeld, nach dem sich die rotorseitigen Permanentmagnete ausrichten. Eine kontinuierliche Drehbewegung des Rotors wird erzielt, indem mittels Sensoren die Drehstellung des Rotors gemessen wird. Abhängig von der Drehstellung des Rotors werden über elektrische oder elektronische Schalter die Wicklungen derart bestromt, dass im Stator ein Drehfeld entsteht, dem der Rotor folgt. Der Rotor dreht sich im Wesentlichen synchron mit dem Statordrehfeld.

Gemäß der DE 101 27 670 A1 ist die so genannte Blockkommutierung ein übliches Verfahren zur Ansteuerung eines dreiphasigen bürstenlosen Motors. Dabei werden die drei eine Sternschaltung bildenden Phasen mit sich abrupt ändernden Ansteuerspannungen beaufschlagt. Während in dieser Sternschaltung erste Enden der Phasenwicklungen galvanisch miteinander verbunden sind, sind die zweiten Enden der Phasenwicklungen mit einer Steuerschaltung verbunden, die sechs Leistungsschalter aufweist. Jeweils zwei Leistungsschalter sind zwischen zwei Spannungspolen in Reihe geschaltet. Zwischen jeweils einem in Reihe geschalteten Leistungsschalterpaar befindet sich ein Knotenpunkt, der mit dem zweiten Ende einer der Phasenwicklungen verbunden ist.

Bei der Blockkommutierung werden die Phasen bei der Sternschaltung derart angesteuert, dass ein Strom stets durch zwei Phasen bzw. Phasenwicklungen fließt, während eine Phase (Phasenwicklung) stromlos bleibt. Bei der Dreieckschaltung sind stets die drei Phasenwicklungen bestromt. Die Wicklung des Stators ist derart, dass der Rotor während einer Umdrehung alle drei Phasen nur einmal passiert, so dass die zeitliche Dauer einer elektrischen Welle einer Phase mit der zeitlichen Dauer einer mechanischen Welle, d.h. einer Umdrehung des Rotors, übereinstimmt. Aufeinander folgende elektrische Wellen von aufeinander folgenden Phasen weisen einen Abstand von 120° auf, wobei 360° sich auf eine volle elektrische Welle bezieht. Der Kommutierungswinkel, d. h. derjenige Winkel, während dem eine Phase (Phasenwicklung) bestromt ist, beträgt 120°. Während 60° jeder elektrischen Halbwelle ist die Phase nicht bestromt. Nach jeweils 60° wird der Strom auf das nächste Phasenpaar weitergeschaltet.

Der resultierende Verlauf des Drehmoments, das auf den Rotor wirkt, ist nicht wellenfrei. Vielmehr liegt eine sogenannte Drehmomentenwelligkeit vor. Ferner wird bei einem solchen Ansteuerverfahren die durch den Rotor in den Phasen induzierte Spannung, d. h. die elektromotorische Kraft (EMK) nicht optimal ausgenutzt mit der Folge, dass der Wirkungsgrad ebenfalls nicht optimal ist.

Zur Verbesserung der Drehmomentwelligkeit oder des Wirkungsgrades im Motorbetrieb ist beispielsweise aus der DE 101 27 670 A1 ein Verfahren bekannt, bei dem ein bürstenloser dreiphasiger Elektromotor mit Blockkommutierung betrieben wird. Dabei wird der Elektromotor derart angesteuert, dass der Kommutierungswinkel kleiner als 180° und größer als 120° ist.

Aus der DE 38 19 064 C3 ist ein Verfahren zur Steuerung eines bürstenlosen Gleichstrommotor bekannt, bei dem ein Kommutierungspunkt jeweils um einen vorgegebenen Zeitbetrag vorverlegt wird.

Generell wird beim Motorbetrieb zwischen dem Regel- oder Normalbetrieb und dem Anfahrbetrieb unterschieden. Der Regel- oder Normalbetrieb erfolgt zwischen einer Mindestdrehzahl und einer Maximaldrehzahl des Gleichstrommotors. Im Anfahrbetrieb wird die Drehzahl von Null (n = 0) auf die Mindestdrehzahl (nₘᵢₙ) erhöht.

Ein bürstenloser Gleichstrommotor, insbesondere für einen Kühlerlüfter eines Kraftfahrzeuges, weist erkanntermaßen im Anfahrbetrieb eine störende Geräuschentwicklung auf. Bei niedrigen Umdrehungsgeschwindigkeiten, wie diese im Anfahrbetrieb vorherrschen, ist das Geräusch des Gleichstrommotors maßgeblich für einen störenden Gesamtgeräuschpegel, während das Luftgeräusch des Kühlerlüfters bei niedrigen Drehzahlen zu vernachlässigen ist.

Der Erfindung liegt die Aufgabe zugrunde, einen derartigen bürstenlosen Gleichstrommotor hinsichtlich der Geräuschentwicklung im Anfahrbetrieb zu verbessern.

Diese Aufgabe wird erfindungsgemäß gelöst durch ein Verfahren mit den Merkmalen des Anspruchs 1. Die Aufgabe wird weiterhin gelöst durch eine Steuervorrichtung mit den Merkmalen des Anspruchs 3. Vorteilhafte Ausführungsformen und Weiterbildungen der Erfindung ergeben sich aus dem abhängigen Anspruch und aus den nachfolgenden Ausführungen.

Die Erfindung geht von einem Verfahren aus, bei welchem zum Betreiben eines dreiphasigen bürstenlosen Gleichstrommotors, dessen Phasenwicklungen (u,v,w) von einem an eine Spannungsquelle mit einem Hochpotential und mit einem Niederpotential angeschlossenen Wechselrichter gespeist werden, dessen in Brückenschaltung angeordnete Halbleiterschalter derart anzusteuern, dass im Motorbetrieb bei Sternschaltung stets zwei Phasenwicklungen (u,v,w) und bei Dreieckschaltung stets alle drei Phasenwicklungen bestromt werden.

Bezüglich des Verfahrens zum Betreiben eines dreiphasigen bürstenlosen Gleichstrommotors ist vorgesehen, dass beim Motorbetrieb mit Normalkommutierung die Kommutierungswinkel um einen Winkelbetrag von 60° versetzt sind, wobei der Gleichstrommotor mit Normalkommutierung betrieben wird, wenn die Drehzahl größer oder gleich einer Mindestdrehzahl ist. Im Anfahrbetrieb des Gleichstrommotors wird - bezogen auf die Normalkommutierung - bis zur Mindestdrehzahl des Gleichstrommotors ein hochpotentialseitiger Kommutierungswinkel einer Phasenwicklung gegen einen niederpotentialseitigen Kommutierungswinkel dieser Phasenwicklung um einen Winkelbetrag größer 0° und kleiner oder gleich 60° verschoben.

Die erfindungsgemäße Steuervorrichtung umfasst einen Wechselrichter und eine Brückenschaltung mit zwischen ein Hochpotential und ein Niederpotential einer Spannungsquelle in Reihe geschaltete Halbleiterschalter in jedem von drei Brückenzweigen zum Betreiben bzw. Ansteuern des Gleichstrommotors. Der Wechselrichter umfasst zudem einen Mikrocontroller, der zur Ausführung des erfindungsgemäßen Verfahrens oder einer seiner nachfolgend beschriebenen Varianten schaltungs- und/oder programmtechnisch eingerichtet ist, so dass das erfindungsgemäße Verfahren automatisch durchgeführt wird.

Der Mikrocontroller steuert die Halbleiterschalter des Wechselrichters derart an, dass stets zwei Phasenwicklungen bestromt werden. Dabei wird im Anfahrbetrieb bis zu einer Mindestdrehzahl des Gleichstrommotors ein hochpotentialseitiger Kommutierungswinkel einer Phasenwicklung gegenüber einem niederpotentialseitigen Kommutierungswinkel dieser Phasenwicklung um einen Winkelbetrag von größer 0° und kleiner oder gleich 60° verschoben. Ferner ist die Steuervorrichtung bzw. der Mikrocontroller dazu eingerichtet, den Gleichstrommotor mit einer Normalkommutierung zu betreiben, wenn die Drehzahl größer oder gleich der Mindestdrehzahl ist, wobei ein Abstand von 60° zwischen den 120° Kommutierungswinkeln eingestellt ist. Eine pulsweitenmodulierte Ansteuerung (PWM-Ansteuerung) und Bestromung der Halbleiterschalter der Phasenwicklungen ist dabei besonders vorteilhaft.

Nachfolgend werden Ausführungsbeispiele der Erfindung anhand einer Zeichnung näher erläutert. Darin zeigen:
- Fig. 1: in einem Blockschaltbild eine schematische Darstellung einer Vorrichtung zum Ansteuern eines Gleichstrommotors mit einem Wechselrichter mit Halbleiterschaltem in Brückenschaltung,
- Fig. 2: in einem Flussdiagramm eine Schaltabfolge der Halbleiterschalter bei einer Normalkommutierung über einen 360°-Vollzyklus und daraus resultierend eine Spannung und ein Drehmoment,
- Fig. 3: in einem Flussdiagramm die Schaltungsabfolge bei einer Kommutierung mit 30°-Phasenverschiebung,
- Fig. 4: in einem Flussdiagramm die Schaltungsabfolge bei einer Kommutierung mit 60°-Phasenverschiebung, und
- Fig. 5: in einem Dezibel-Drehzahl-Diagramm das Geräuschverhalten des Gleichstrommotors im Anfahrbetrieb (Anlaufbetrieb) bei Normalkommutierung sowie bei der Kommutierung mit 30°- Phasenverschiebung und mit 60°-Phasenverschiebung.

Einander entsprechende Teile und Größen sind in allen Figuren mit den gleichen Bezugszeichen versehen.

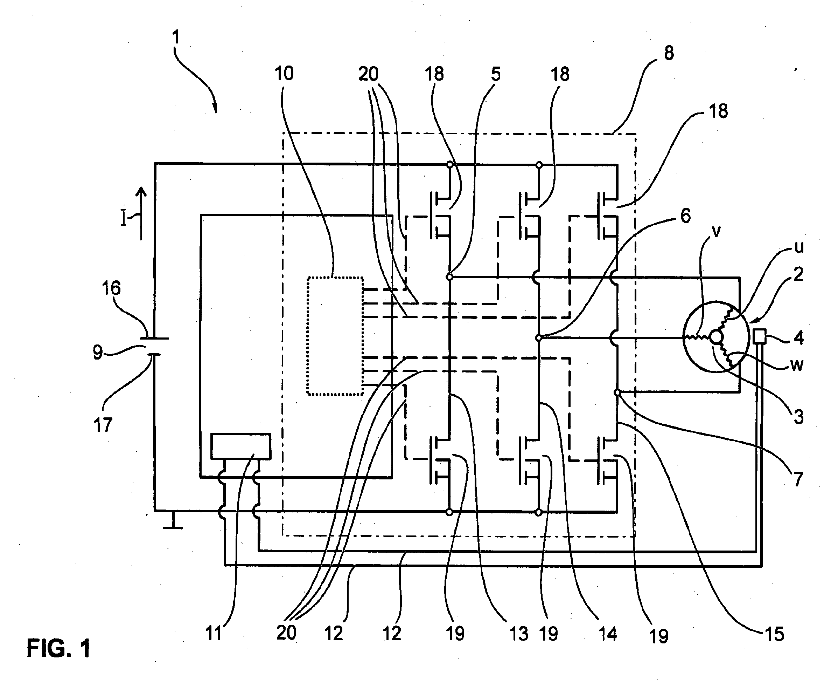

Fig. 1 zeigt in einem Blockschaltbild eine Vorrichtung (Steuervorrichtung) 1 zum Ansteuern eines Gleichstrommotors 2. Der Gleichstrommotor 2 umfasst drei Phasenwicklungen u,v,w. Dabei sind erste Enden einer ersten Phasenwicklung u, einer zweiten Phasenwicklung v und einer dritten Phasenwicklung w miteinander zu einer Sternschaltung 3 verschaltet. Die Phasenwicklungen u,v,w sind in nicht näher dargestellter Weise in einem Stator um 120° versetzt angeordnet und umgeben eine Drehachse eines mit Permanentmagneten versehenen Rotors. Ferner ist dem Gleichstrommotor 2 ein Hall-Sensor 4 zugeordnet. Die Phasenwicklungen u,v,w sind an zweiten Enden mit Kontenpunkten 5,6,7 einer B6-Topologie eines strichpunktiert umrandet dargestellten Wechselrichters 8 verschaltet, der Teil der Steuervorrichtung 1 ist oder sein kann.

Die Steuervorrichtung 1 umfasst des Weiteren eine Versorgungsspannungsquelle (Gleichspannungsquelle) 9 zur elektroenergetischen Versorgung des Gleichstrommotors 2, einen Mikrocontroller (Mikroprozessor) 10 zur Ermittlung der Drehzahl n des Gleichstrommotors 2 aus der Positionsänderungsgeschwindigkeit der beispielsweise mittels einer Positionsermittlungseinheit 11 bestimmten Rotorpositionen. Die Positionsermittlungseinheit 11 ist signaltechnisch über Signalleitungen 12 mit dem Hall-Sensor 4 verbunden.

Der Wechselrichter 8 umfasst in einer Brückenschaltung einen ersten, einen zweiten und einen dritten Brückenzweig 13,14 bzw. 15, die auf einer ersten Seite (Hochpotentialseite) an ein Hochpotential 16 der Gleichspannungsquelle 9 angeschlossen sind. An einer zweiten Seite (Niederpotentialseite) ist jeder Brückenzweig 13,14,15 an ein Niederpotential 17 (Masse) der Gleichspannungsquelle 9 angeschlossen. Die Gleichspannungsquelle 9 ist hier eine Fahrzeugbatterie.

Jeder Brückenzweig 13,14,15 umfasst einen ersten Halbleiterschalter 18 und einen zweiten Halbleiterschalter 19, die in Reihe zwischen dem Hochpotential 16 und dem Niederpotential 17 verschaltet sind. Dabei sind die ersten Halbleiterschalter 18 unmittelbar mit der Hochpotentialseite 16 und die zweiten Halbleiterschalter 19 unmittelbar mit der Niederpotentialseite 17 verschaltet. In jedem Brückenzweig 13,14,15 ist dem ersten Halbleiterschalter 18 und dem zweiten Halbleiterschalter 19 der jeweilige Knotenpunkt 5,6,7 zugeordnet. Dabei ist der erste Knotenpunkt 5 des ersten Brückenzweiges 13 mit der ersten Phasenwicklung u, der zweite Knotenpunkt 6 des zweiten Brückenzweiges 14 mit der zweiten Phasenwicklung v und der dritte Knotenpunkt 7 des dritten Brückenzweiges 15 mit der dritten Phasenwicklung w kontaktiert. Der Mikrocontroller 10 ist schaltungstechnisch mit Steuereingängen der sechs Halbleiterschalter 18,19 zweckmäßigerweise über eine Steuerleitung 20 oder dergleichen verbunden.

Im Motorbetrieb bewirkt der Mikrocontroller 10 des Wechselrichters 8 eine Schaltung der Halbleiterschalter 18,19, bei der ein erster hochpotentialseitiger Halbleiterschalter 18 eine der Phasenwicklungen u,v,w an das Hochpotential 16 und ein zweiter niederpotentialseitiger Halbleiterschalter 19 eine andere Phasenwicklung u,v,w an das Niederpotential 17 anschließt und somit einen Strompfad bildet. Dabei sind die jeweils anderen beiden ersten und zweiten Halbleiterschalter 18,19 der Hochpotentialseite 16 bzw. der Niederpotentialseite 17 geöffnet, also nicht leitend geschaltet. Infolge des Stroms I in den Phasenwicklungen u,v,w des Strompfades des Gleichstrommotors 2 wird ein magnetisches Feld erzeugt, nach welchem sich die Permanentmagnete mit dem Rotor ausrichten. Um nun eine Drehbewegung des Rotors zu bewirken, werden die Phasenwicklungen u,v,w durch Schalten der Halbleiterschalter 18,19 kommutiert, also wechselweise bestromt. Bei einer zweckmäßigen Bestromung der Phasenwicklungen u,v,w wandert das magnetische Feld (Erregerfeld) entlang der um 120° versetzt angeordneten Phasenwicklungen u,v,w. Der drehbeweglich gelagerte Rotor mit Permanentmagneten richtet sich nach dem Erregerfeld aus und beschreibt somit eine dem Erregerfeld nacheilende Drehbewegung. Im Falle eines Kühlerlüftermotors 2 eines Kraftfahrzeugs ist am Rotor bzw. dessen Rotorwelle ein Ventilator befestigt, der sich zusammen mit dem Rotor bewegt.

Der Mikrocontroller 10 und die Positionsermittlungseinheit 11 sind geeigneterweise auf einer gemeinsamen Leiterplatte (Platine) angeordnet. Der Mikrocontroller 10 kann dabei von der Positionsermittlungseinheit 11 ermittelte Daten nutzen, um die Halbleiterschalter 18,19 zweckmäßig zu schalten bzw. anzusteuern. So wechselt der Mikrocontroller beispielsweise bei dem Erreichen einer bestimmten Drehzahl des Gleichstrommotors 2 von einem Anfahrbetrieb mit einer Kommutierung mit Phasenverschiebung in einen Normalbetrieb mit Normalkommutierung.

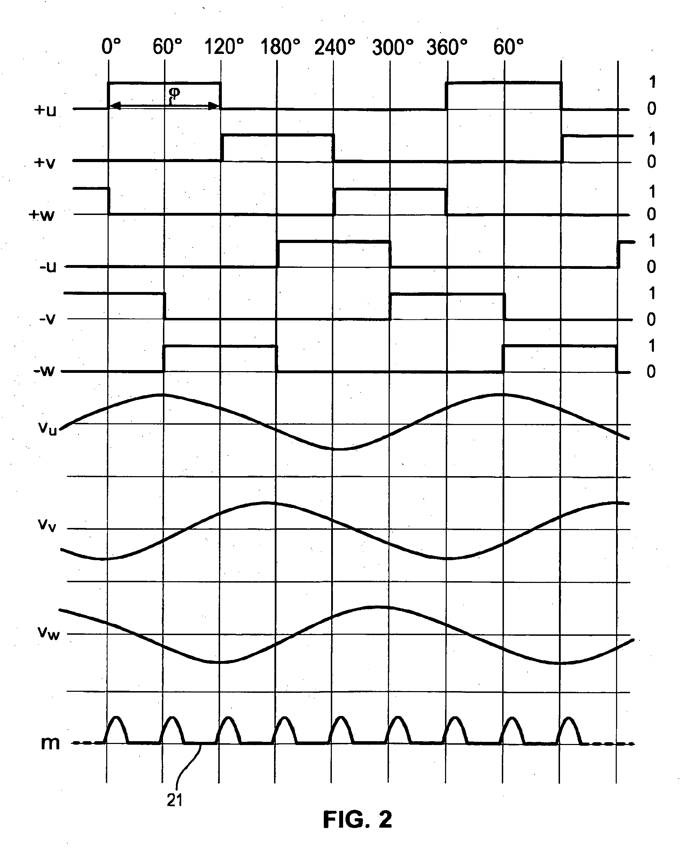

Die Fig. 2 zeigt in einem Flussdiagramm die Schaltfolge der als Feldeffekttransistor (FET) ausgestalteten Halbleiterschalter 18,19 bei einer Normalkommutierung (Blockkommutierung). Dabei sind Schaltstellungen der hochpotential- und niederpotentialseitigen ersten und zweiten Halbleiterschalter 18,19 über einen 360°-Vollzyklus (elektrische Vollwelle) und eine entsprechende Spannung Vᵤ,Vᵥ,V_{w} in der ersten, zweiten und dritten Phasenwicklung u.v.w, sowie ein Drehmoment m des Gleichstrommotors 2 dargestellt.

In einem ersten, zweiten und dritten Verlaufsgraph +u, +v, +w sind die von dem Mikrocontroller 10 bewirkten Schalterstellungen der hochpotentialseitigen ersten Halbleiterschalter 18 des ersten, zweiten und dritten Brückenzweigs 13,14,15 dargestellt, die mit der ersten, zweiten und dritten Phase u,v,w verschaltet sind. Dabei ist eine Aufstellung mit "0" und eine Schlussstellung mit "1" gekennzeichnet, wobei Aufstellung hier "elektrisch getrennt" und Schlussstellung "elektrisch verbunden" bedeutet. In einem vierten, fünften und sechsten Verlaufsgraph -u,-v,-w sind die Schalterstellungen der zweiten niederpotentialseitigen Halbleiterschalter 19 des ersten, zweiten und dritten Brückenzweiges 13,14,15 dargestellt.

Jeder der sechs Halbleiterschalter 18,19 schaltet gemäß der Blockkommutierung - ist also über einen 360°-Vollzyklus für eine Dauer von 120° durchgehend in Schlussstellung - und für eine Dauer von 240° des Vollzyklus durchgehend in Aufstellung. Die hochpotentialseitigen ersten Halbleiterschalter 18 werden nacheinander um einen 120° Winkel versetzt in der Reihenfolge erster, zweiter und dritter Brückenzweig 13,14,15 in Schlussstellung geschaltet. Niederpotentialseitig werden die zweiten Halbleiterschalter 19 um einen 120°-Winkel versetzt in der Reihenfolge erster, zweiter, dritter Brückenzweig 13,14,15 in Schlussstellung geschaltet. Dabei wird jeweils der erste Halbleiterschalter 18 eines Brückenzweiges 13,14,15 und der zweite Halbleiterschalter dieses Brückenzweiges 13,14,15 um 180° versetzt in Schlussstellung geschaltet. Somit ergibt sich über eine Vollwelle für jeden Brückenzweig 13,14,15 mit zugehöriger Phasenwicklung für 120° ein Schluss mit der Hochpotentialseite 16, gefolgt von einem 60°-Winkel ohne Schluss, gefolgt von einem 120°-Winkel mit Schluss mit der Niederpotentialseite 17 und gefolgt von einem 60°-Teilzyklus ohne Schluss.

Folglich ergibt sich über den 360° Vollzyklus eine Schaltfolge in der aufeinanderfolgend für den jeweiligen 60°-Teilzyklen:
- der hochpotentialseitige erste Halbleiterschalter 18 des ersten Brückenzweiges 13 und der niederpotentialseitige zweite Halbleiterschalter 19 des zweiten Brückenzweiges 14 (0° bis 60°),
- der hochpotentialseitige erste Halbleiterschalter 18 des ersten Brückenzweiges 13 und der niederpotentialseitige zweite Halbleiterschalter 19 des dritten Brückenzweiges 15 (60° bis 120°),
- der hochpotentialseitige erste Halbleiterschalter 18 des zweiten Brückenzweiges 14 und der niederpotentialseitige zweite Halbleiterschalter 19 des dritten Brückenzweiges 15 (120° bis 180°),
- der hochpotentialseitige erste Halbleiterschalter 18 des zweiten Brückenzweiges 14 und der niederpotentialseitige zweite Halbleiterschalter 19 des ersten Brückenzweiges 13 (180° bis 240°),
- der hochpotentialseitige erste Halbleiterschalter 18 des dritten Brückenzweiges 15 und der niederpotentialseitige zweite Halbleiterschalter 19 des ersten Brückenzweiges 13 (240° bis 300°), und
- der hochpotentialseitige erste Halbleiterschalter 18 des dritten Brückenzweiges 15 und der niederpotentialseitige zweite Halbleiterschalter 19 des zweiten Brückenzweiges 14 in Schlussstellung geschaltet sind (300° bis 360°), während die jeweils übrigen vier Halbleiterschalter 18,19 in Aufstellung geschaltet sind.

Aus dieser Schaltfolge bei Normalkommutierung ergibt sich über den Vollzyklus eine im 60°-Takt erfolgende Kommutierung, also ein Wechsel des Stromflusses von einer Phasenwicklung u,v,w auf eine andere Phasenwicklung u,v,w oder der Wechsel einer Stromflussrichtung in einer Phasenwicklung u,v,w. Jede Phasenwicklung u,v,w weist einen 120° Kommutierungswinkel (ϕ = 120°) auf, in währenddessen die Phasenwicklung u,v,w bestromt ist. Dabei ist über den Vollzyklus der Kommutierungswinkel ϕ sowie der hochpotentialseitige und der niederpotentialseitige Kommutierungspunkt einer Phasenwicklung um 180° versetzt.

Ferner sind die hochpotentialseitigen und die niederpotentialseitigen Kommutierungswinkel ϕ jeweils aufeinanderfolgend um 120° versetzt in der Reihenfolge erster, zweiter und dritter Brückenzweig 13,14,15 eingestellt. Hierbei fließt über einen Vollzyklus aufeinander folgend für die jeweiligen 60°-Teilzyklen der Strom I:
- von dem Hochpotential 16 durch die erste Phasenwicklung u und über die zweite Phasenwicklung v zum Niederpotential 17 (0°bis 60°),
- von dem Hochpotential 16 durch die erste Phasenwicklung u und über die dritte Phasenwicklung w zum Niederpotential 17 (60° bis 120°),
- von dem Hochpotential 16 durch die zweite Phasenwicklung v und über die dritte Phasenwicklung w zum Niederpotential 17 (120° bis 180°),
- von dem Hochpotential 16 durch die zweite Phasenwicklung v und über die erste Phasenwicklung u zum Niederpotential 17 (180° bis 240°),
- von dem Hochpotential 16 durch die dritte Phasenwicklung w und über die erste Phasenwicklung u zum Niederpotential 17 (240° bis 300°), sowie
- von dem Hochpotential 16 durch die dritte Phasenwicklung w und über die zweite Phasenwicklung v zum Niederpotential 17 (300° bis 360°).

Die vom Magnetfeld des Motors 2 erzeugte Gegen-EMK(Elektromotorische Kraft)-Spannung in den Phasenwicklungen u,v,w ist in Spannungskurven Vᵤ,Vᵥ,V_{w} dargestellt. Dabei ist eine maximale Spannung V_{u max} in der ersten Phasenwicklung u um einen 60°-Winkel nach einem hochpotentialseitigen Kommutierungspunkt erreicht, bei dem zum Schluss zwischen der ersten Phasenwicklung u und dem Hochpotential 16 geschaltet wird. Eine minimale Spannung V_{u min} in der ersten Phasenwicklung u ist um einen 60°-Winkel nach dem niederpotentialseitigen Kommutierungspunkt erreicht, also dem Kommutierungspunkt, bei dem der Schluss zwischen der ersten Phasenwicklung u und dem Niederpotential 17 erfolgt. In der zweiten und dritten Phase v,w wird die maximale oder minimale Phasenspannung V_{v max}, V_{v min}, V_{w max}, V_{w min} jeweils 60° nach der Kommutierung erreicht.

Eine Drehmomentkennlinie 21 zeigt das Drehmoment m des Gleichstrommotors 2 über den 360°-Vollzyklus. Dabei treten im 60°-Takt über den Vollzyklus sechs Drehmomentmaxima auf. Das vom Motorstrom bewirkte Drehmoment m ist von Null verschieden und kann bei einem Wert von beispielsweise 25mJ schwanken, während die Drehmomentmaxima beispielsweise bis 100mJ betragen können.

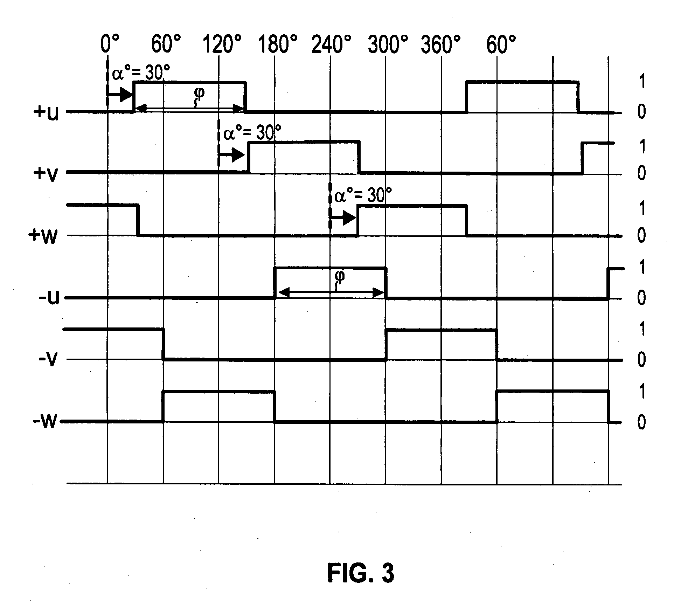

Die Fig. 3 zeigt in einem Verlaufsdiagramm die Schaltfolge mit einer 30°-Phasenverschiebung (α = 30°). Bezogen auf die Normalkommutierung bedeutet Phasenverschiebung, dass der Kommutierungswinkel ϕ und somit auch der hochpotentialseitige und niederpotentialseitige Kommutierungspunkt einer jeweiligen Phasenwicklung um einen Winkelbetrag gegeneinander verschoben sind. Dabei werden die ersten und die zweiten Halbleiterschalter 18,19 über einen Vollzyklus jeweils für 120° - aufeinander folgend mit einem 120°-Versatz in der Reihenfolge erster, zweiter, dritter Brückenzweig 13, 14 bzw. 15 - in Schlussstellung geschaltet. Dabei ist die Schaltung der ersten Halbleiterschalter 18 gegenüber der Normalkommutierung um einen Winkelbetrag α von 30° vorversetzt.

Beim Motorbetrieb sind zu jedem Zeitpunkt jeweils ein erster und ein zweiter Halbleiterschalter 18,19 unterschiedlicher Brückenzweige 13,14,15 in Schlussstellung, während die übrigen vier Halbleiterschalter 18,19 in Offenstellung sind. Folglich ergibt sich eine asymmetrische Schaltfolge, bei der alternierend nach einem Winkelbetrag von 30° und nach einem Winkelbetrag von 90° kommutiert wird. Über einen Vollzyklus ergibt sich eine Kommutierungsfolge, bei der über einen Vollzyklus aufeinander folgend der Strom I
- für 30° von dem Hochpotential 16 über die erste Phasenwicklung u und die zweite Phasenwicklung v zum Niederpotential 17 (30° bis 60°),
- für 90° von dem Hochpotential 16 über die erste Phasenwicklung u und die dritte Phasenwicklung w zum Niederpotential 17 (60° bis 150°),
- für 30° von dem Hochpotential 16 über die zweite Phasenwicklung v und die dritte Phasenwicklung w zum Niederpotential 17 (150° bis 180°),
- für 90° von dem Hochpotential 16 über die zweite Phasenwicklung v und die erste Phasenwicklung u zum Niederpotential 17 (180° bis 270°)
- für 30° von dem Hochpotential 16 über die dritte Phasenwicklung w und die erste Phasenwicklung u zum Niederpotential 17 (270° bis 300°), sowie
- für 90° von dem Hochpotential 16 über die dritte Phasenwicklung w und die zweite Phasenwicklung v zum Niederpotential 17 (300° bis 30°) fließt.

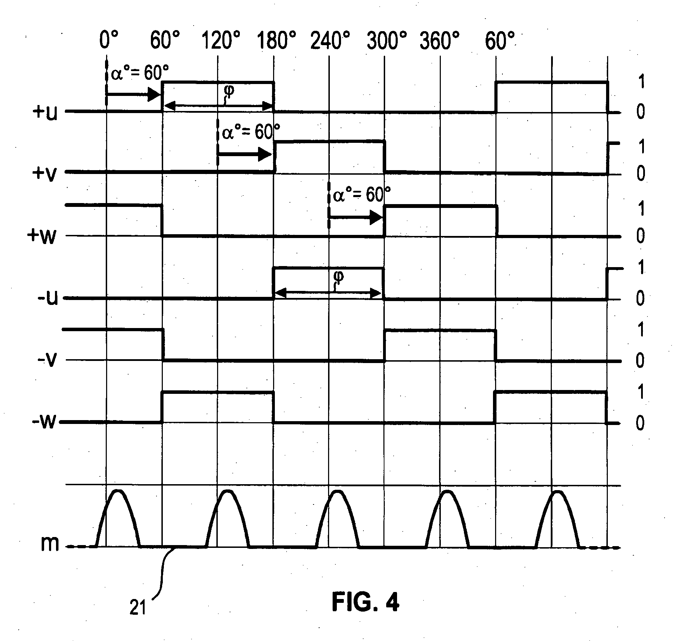

Fig. 4 zeigt in einem Verlaufsdiagramm eine Schaltfolge mit einer 60°-Phasenverschiebung (α = 60°). Dabei ist der erste Halbleiterschalter 18 der erste, zweite und dritte Brückenzweig 13,14,15 in einem Vollzyklus aufeinander folgend jeweils für 120° in Schlussstellung. Der zweite Halbleiterschalter 19 des ersten, zweiten und dritten Brückenzweigs 13,14,15 ist über einen Vollzyklus aufeinander folgend jeweils für 120° in Schlussstellung. Für die jeweils übrigen 240° ist jeder Halbleiterschalter 18,19 in Aufstellung. Entgegen der Normalkommutierung gemäß Fig.2 sind bei jeder Erregerwicklung die hochpotentialseitigen Kommutierungspunkte einer Phasenwicklung u,v,w gegenüber den Niederpotential seitigen Kommutierungspunkten um 60° vorverschoben. Die hochpotenzialseitige Kommutierung erfolgt also um einen Winkelbetrag α von 60° später als bei der Normalkommutierung.

Daraus ergibt sich, dass über einen Vollzyklus drei Doppelkommutierungen anstelle von sechs einzelnen Kommutierungen erfolgen. Doppelkommutierung bedeutet hier, dass gleichzeitig der Strompfad hochpotentialseitig und niederpotentialseitig durch eine gleichzeitige Schaltung eines ersten Halbleiterschalters 18 und eines zweiten Halbleiterschalters 19 geändert wird. Dabei ist eine Phasenwicklung u,v,w vor und nach der Doppelkommutierung weiterhin bestromt, die Flussrichtung des Stroms I jedoch umgekehrt. Somit ergeben sich über einen 360°-Vollzyklus drei Schaltzustände bei dem aufeinander folgend
- für 120° der erste Halbleiterschalter 18 des ersten Brückenzweiges 13 und der zweite Halbleiterschalter 19 des dritten Brückenzweiges 15 (60° bis 180°),
- für 120° der erste Halbleiterschalter 18 des zweiten Brückenzweiges 14 und der zweite Halbleiterschalter 19 des ersten Brückenzweiges 13 (180° bis 300°), und
- für 120° der erste Halbleiterschalter 18 des dritten Brückenzweiges 15 und der zweite Halbleiterschalter 19 des zweiten Brückenzweiges 14 in Schlussstellung geschaltet sind (300° bis 60°).

Folglich verlaufen zwei Kommutierungswinkel ϕ synchron zu einem jeweiligen Schaltzustand über den 360°-Vollzyklus, bei dem der Strom I aufeinander folgend
- für 120° von dem Hochpotential 16 über die erste Phasenwicklung u und die dritte Phasenwicklung w zum Niederpotential 17 (60° bis 180°),
- für 120° von dem Hochpotential 16 über die zweite Phasenwicklung v und die erste Phasenwicklung u zum Niederpotential 17 (180° bis 300°), und
- für 120° von dem Hochpotential 16 über die dritte Phasenwicklung w und die zweite Phasenwicklung v zum Niederpotential 17 fließt (300° bis 60°).

Bei der Schaltung der Halbleiterschalter 18,19 sind der erste Halbleiterschalter 18 und der zweite Halbleiterschalter 19 eines gleichen Brückenzweiges 13,14,15 nicht gleichzeitig in Schlussstellung geschaltet, da andernfalls ein Kurzschluss entstehen würde. Die Drehmomentkennlinie 21 zeigt über einen Vollzyklus von 360° drei Drehmomentmaxima, die höher (betragsmäßig größer) als die in Fig. 2 dargestellten Drehmomentmaxima sind.

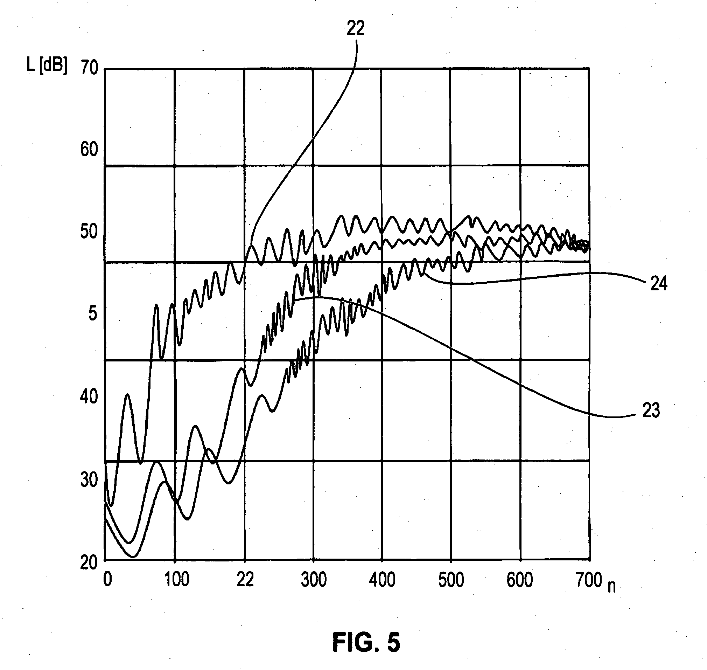

Die Fig. 5 zeigt in einer graphischen Darstellung das Motorgeräusch des bürstenlosen-Gleichstrommotors 2 gegen die Drehzahl n des Gleichstrommotors 2 im Anfahrbetrieb von n = 0 bis n = 700 Umdrehungen pro Minute. Dabei ist jeweils eine Verlaufskurve für die Normalkommutierung für die Phasenverschiebungen von 30°und 60° gemäß der Fig. 2, 3 bzw. 4 dargestellt. Eine erste Verlaufskurve 22 zeigt einen frühen Anstieg des Motorgeräusches bei Normalkommutierung. Dabei ist bei einer Drehzahl n = 100 Umdrehungen pro Minute ein Geräuschpegel von über 40dB und bei n = 200 Umdrehungen pro Minute ein Geräuschpegel von 50dB überschritten. Ab einer Drehzahl größer n = 200 Umdrehungen pro Minute verbleibt der Geräuschpegel des Gleichstrommotors 2 in einem Bereich zwischen 50dB und 60dB.

Eine zweite Verlaufskurve 23 zeigt die Geräuschentwicklung für die Kommutierung mit 30°-Phasenverschiebung gemäß Fig. 3. Dabei ist der Anstieg des Geräuschpegels beim Anlaufen gegenüber dem der Normalkommutierung niedriger. Der Geräuschpegel liegt bei der 30°-Phasenverschiebung bei einer Drehzahl n = 200 Umdrehungen pro Minute bei etwa 40dB und bei n= 300 Umdrehungen pro Minute bei 50dB. Für die Kommutierung mit einer 60°-Phasenverschiebung wird ein Geräuschpegel von 50dB erst bei n = 450 Umdrehungen pro Minute überschritten, wie aus einer dritten Verlaufskurve 24 ersichtlich ist.

### Bezugszeichenliste

- 1: Steuervorrichtung
- 2: Gleichstrommotor
- 3: Sternschaltung
- 4: Hall-Sensor
- 5: Knotenpunkt
- 6: Knotenpunkt
- 7: Knotenpunkt
- 8: Wechselrichter
- 9: Versorgungsspannungsquelle
- 10: Mikrocontroller
- 11: Positionsermittlungseinheit
- 12: Signalleitung
- 13: erste Brückenschaltung
- 14: zweite Brückenschaltung
- 15: dritte Brückenschaltung
- 16: Hochpotential
- 17: Niederpotential
- 18: erster Halbleiterschalter
- 19: zweiter Halbleiterschalter
- 20: Steuerleitung
- 21: Drehmomentkennlinie
- 22: Verlaufskurve
- 23: Verlaufskurve
- 24: Verlaufskurve

- m: Drehmoment
- n: Drehzahl
- u: erste Phasenwicklung
- v: zweite Phasenwicklung
- w: dritte Phasenwicklung
- ϕ: Kommutierungswinkel
- α: Phasenverschiebungswinkel
- Vᵤ: Spannung
- Vᵥ: Spannung
- V_{w}: Spannung

## Patentansprüche

1. Verfahren zum Betreiben eines dreiphasigen bürstenlosen Gleichstrommotors (2), dessen Phasenwicklungen (u,v,w) von einem an eine Spannungsquelle (9) mit einer Hochpotentialseite (16) und mit einer Niederpotentialseite (17) angeschlossenen Wechselrichter (8) gespeist werden, dessen in Brückenzweigen (13,14,15) einer Brückenschaltung angeordnete Halbleiterschalter (18,19) derart angesteuert werden, dass im Motorbetrieb stets zwei Phasenwicklungen (u,v,w) bestromt sind,
- wobei der Gleichstrommotor (2) mit Normalkommutierung betrieben wird, wenn die Drehzahl (n) größer oder gleich einer Mindestdrehzahl (nₘᵢₙ) ist,
- wobei sich bei diesem Motorbetrieb mit Normalkommutierung über einen 360°-Zyklus für jeden Brückenzweig (13,14,15) mit zugehöriger Phasenwicklung (u,v,w) für 120° eine elektrische Verbindung mit der Hochpotentialseite (16), gefolgt von einem 60°-Winkel ohne elektrische Verbindung (16), gefolgt von einem 120°-Winkel mit elektrischer Verbindung mit der Niederpotentialseite (17) und gefolgt von einem 60°-Teilzyklus ohne elektrische Verbindung ergibt, wobei während des 120°-Winkels der elektrischen Verbindung mit der Hochpotentialseite (16) der einen Phasenwicklung (u,v,w) aufeinanderfolgend für jeweils einen 60°-Winkel eine elektrische Verbindung mit der Niederpotentialseite (17) der anderen Brückenzweige (13,14,15) der anderen Phasenwicklungen (u,v,w) besteht,
**dadurch gekennzeichnet,**
**dass** bezogen auf die Normalkommutierung im Anfahrbetrieb bis zur Mindestdrehzahl (nₘᵢₙ) des Gleichstrommotors (2) bei einer Verbindung eines Halbleiterschalters (18) mit der Hochpotentialseite (16) eine hochpotentialseitige Kommutierung einer Phasenwicklung (u,v,w) gegen eine niederpotentialseitige Kommutierung dieser Phasenwicklung (u,v,w) bei einer Verbindung eines Halbleiterschalter (19) mit der Niederpotentialseite (17) um einen Winkelbetrag (α) von größer 0° und kleiner oder gleich 60° zwischen dem Beginn der Kommutierung auf der Hochpotentialseite (16) und dem Beginn der Kommutierung auf der Niederpotentialseite (17) der jeweiligen Phasenwicklung (u,v,w) für alle Phasenwicklungen (u,v,w) verschoben wird.

2. Verfahren nach Anspruch 1,
**dadurch gekennzeichnet,**
**dass** im Anfahrbetrieb die hochpotentialseitige Kommutierung der jeweiligen Phasenwicklung (u,v,w) gegen die niederpotentialseitige Kommutierung dieser Phasenwicklung (u,v,w) um einen Winkelbetrag (α) von 15°, 30°, 45° oder 60° verschoben wird.

3. Steuervorrichtung (1) zum Ansteuern eines dreiphasigen bürstenlosen Gleichstrommotors (2), mit einem zwischen ein Hochpotential (16) und ein Niederpotential (17) einer Spannungsquelle (9) geschalteten Wechselrichter (8) mit einer Brückenschaltung mit drei Brückenzweigen (13,14,15), in denen jeweils ein an das Hochpotential (16) geführter hochpotentialseitiger Halbleiterschalter (18) und ein an das Niederpotential (17) geführter niederpotentialseitiger Halbleiterschalter (19) in Reihe geschaltet sind, und mit einem Mikrocontroller (10), der dazu eingerichtet ist, dass im Motorbetrieb stets zwei Phasenwicklungen (u,v,w) bestromt sind und der Gleichstrommotor (2) mit Normalkommutierung betrieben wird, wenn die Drehzahl (n) größer oder gleich einer Mindestdrehzahl (nₘᵢₙ) ist,
- wobei sich bei diesem Motorbetrieb mit Normalkommutierung über einen 360°-Zyklus für jeden Brückenzweig (13,14,15) mit zugehöriger Phasenwicklung (u,v,w) für 120° eine elektrische Verbindung mit der Hochpotentialseite (16), gefolgt von einem 60°-Winkel ohne elektrische Verbindung (16), gefolgt von einem 120°-Winkel mit elektrischer Verbindung mit der Niederpotentialseite (17) und gefolgt von einem 60°-Teilzyklus ohne elektrische Verbindung ergibt, wobei während des 120°-Winkels der elektrischen Verbindung mit der Hochpotentialseite (16) der einen Phasenwicklung (u,v,w) aufeinanderfolgend für jeweils einen 60°-Winkel eine elektrische Verbindung mit der Niederpotentialseite (17) der anderen Brückenzweige (13,14,15) der anderen Phasenwicklungen (u,v,w) besteht,
**dadurch gekennzeichnet,**
**dass** der Mikrocontroller (10) weiter dazu eingerichtet ist, dass bezogen auf die Normalkommutierung im Anfahrbetrieb bis zur Mindestdrehzahl (nₘᵢₙ) des Gleichstrommotors (2) bei einer Verbindung eines Halbleiterschalters (18) mit der Hochpotentialseite (16) eine hochpotentialseitige Kommutierung einer Phasenwicklung (u,v,w) gegen eine niederpotentialseitige Kommutierung dieser Phasenwicklung (u,v,w) bei einer Verbindung eines Halbleiterschalter (19) mit der Niederpotentialseite (17) um einen Winkelbetrag (α) von größer 0° und kleiner oder gleich 60° zwischen dem Beginn der Kommutierung auf der Hochpotentialseite (16) und dem Beginn der Kommutierung auf der Niederpotentialseite (17) der jeweiligen Phasenwicklung (u,v,w) für alle Phasenwicklungen (u,v,w) verschoben wird.

## Claims

1. Method for the operation of a three-phase brushless direct current motor (2), the phase windings (u, v, w) of which are fed by an inverter (8) which is connected to a voltage source (9) having a high potential side (16) and having a low potential side (17), the semiconductor switches (18, 19) of said inverter arranged in bridge branches (13, 14, 15) of a bridge circuit being controlled in such a way that two phase windings (u, v, w) are continually energised during engine operation,
- wherein the direct current motor (2) is operated with normal commutation if the rotational speed (n) is greater than or equal to a minimum rotational speed (nₘᵢₙ),
- wherein, during this engine operation with normal commutation over a 360° cycle for each bridge branch (13, 14, 15) having an associated phase winding (u, v, w) for 120°, an electrical connection to the high potential side (16) results, followed by a 60° angle without electrical connection (16), followed by a 120° angle with electrical connection to the low potential side (17) and followed by a 60° partial cycle without electrical connection, wherein, during the 120° angle of the electrical connection to the high potential side (16) of the one phase winding (u, v, w), an electrical connection to the low potential side (17) of the other bridge branch (13, 14, 15) of the other phase windings (u, v, w) exists consecutively for a 60° angle respectively,
**characterised in that**
with regard to normal commutation during the start-up operation up to the minimum rotation speed (nₘᵢₙ) of the direct current motor (2) in the event of connection of a semiconductor switch (18) to the high potential side (16), a high potential-side commutation of a phase winding (u, v, w) is shifted against a low potential-side commutation of this phase winding (u, v, w) in the event of connection of a semiconductor switch (19) to the low potential side (17) by an angle value (α) of greater than 0° and less than or equal to 60° between the beginning of commutation on the high potential side (16) and the beginning of commutation on the low potential side (17) of the respective phase winding (u, v, w) for all phase windings.

2. Method according to claim 1,
**characterised in that**
during the start-up operation, the high potential-side commutation of the respective phase winding (u, v, w) is shifted against the low potential-side commutation of this phase winding (u, v, w) by an angle value (α) of 15°, 30°, 45° or 60°.

3. Control device (1) for the control of a three-phase brushless direct current motor (2) having an inverter (8) which is switched between high potential (16) and a low potential (17) of a voltage source (9), said inverter (8) having a bridge circuit with three bridge branches (13, 14, 15), in which respectively a high potential-side semiconductor switch (18) guided towards the high potential (16) and a low potential-side semiconductor switch (19) guided towards the low potential (17) are connected in series, and having a microcontroller (10), which is set up in such a way that two phase windings (u, v, w) are continually energised during engine operation and the direct current motor (2) is operated with normal commutation if the rotational speed (n) is greater than or equal to a minimum rotational speed (nₘᵢₙ),
- wherein, during this engine operation with normal commutation over a 360° cycle for each bridge branch (13, 14, 15) having an associated phase winding (u, v, w) for 120°, an electrical connection to the high potential side (16) results, followed by a 60° angle without electrical connection (16), followed by a 120° angle with electrical connection to the low potential side (17) and followed by a 60° partial cycle without electrical connection, wherein, during the 120° angle of the electrical connection to the high potential side (16) of the one phase winding (u, v, w), an electrical connection to the low potential side (17) of the other bridge branch (13, 14, 15) of the other phase windings (u, v, w) exists consecutively for a 60° angle respectively,
**characterised in that**
the microcontroller (10) is further set up in such a way that, with regard to normal commutation during the start-up operation up to the minimum rotation speed (nₘᵢₙ) of the direct current motor (2) in the event of connection of a semiconductor switch (18) to the high potential side (16), a high potential commutation of a phase winding (u, v, w) is shifted against a low potential side commutation of this phase winding (u, v, w) in the event of connection of a semiconductor switch (19) to the low potential side (17) by an angle value (α) of greater than 0° and less than or equal to 60° between the beginning of commutation on the high potential side (16) and the beginning of commutation on the low potential side (17) of the respective phase winding (u, v, w) for all phase windings (u, v, w).

## Revendications

1. Procédé pour faire fonctionner un moteur à courant continu (2), sans balais, à trois phases, dont les enroulements de phase (u, v, w) sont alimentés par un onduleur (8) raccordé à une source de tension (9) avec un côté de potentiel élevé (16) et un côté de potentiel bas (17), et dont les commutateurs à semi-conducteur (18, 19) agencés dans les branches de pont (13, 14, 15) d'un circuit en pont sont commandés de façon telle, que lors du fonctionnement du moteur, on a toujours deux enroulements de phase (u, v, w) qui sont alimentés en courant, procédé
- d'après lequel on fait fonctionner le moteur à courant continu (2) avec une commutation normale lorsque la vitesse de rotation (n) est supérieure ou égale à une vitesse de rotation minimum (nₘᵢₙ),
- d'après lequel lors de ce mode de fonctionnement du moteur avec une commutation normale, il se produit, sur un cycle de 360°, pour chaque branche de pont (13, 14, 15) avec l'enroulement de phase (u, v, w) associé, une liaison électrique avec le côté de potentiel élevé (16) pour 120°, suivi d'un angle de 60° Q sans liaison électrique (16), suivi d'un angle de 120° avec une liaison électrique au côté de potentiel bas (17), et suivi d'un cycle partiel de 60° sans liaison électrique, et d'après lequel pendant l'angle de 120° de la liaison électrique avec le côté de potentiel élevé (16) de l'un des enroulements de phase (u, v, w), l'on a successivement pour à chaque fois un angle de 60°, une liaison électrique avec le côté de potentiel bas (17), des autres branches de pont (13, 14, 15) des autres enroulements de phase (u, v, w),
**caractérisé**
**en ce que** par rapport à la commutation normale, dans le mode de fonctionnement en démarrage jusqu'à la vitesse de rotation minimum (nₘᵢₙ) du moteur à courant continu (2), on produit pour tous les enroulements de phase (u, v, w), lors d'une liaison d'un commutateur à semi-conducteur (18) avec le côté de potentiel élevé (16), un décalage d'une commutation côté potentiel élevé d'un enroulement de phase (u, v, w) à une commutation côté potentiel bas de cet enroulement de phase (u, v, w) lors d'une liaison d'un commutateur à semi-conducteur (19) avec le côté de potentiel bas (17), d'une valeur angulaire (α) supérieure à 0° et inférieure ou égale à 60° entre le début de la commutation du côté du potentiel élevé (16) et le début de la commutation du côté du potentiel bas (17) de l'enroulement de phase (u, v, w) respectif.

2. Procédé selon la revendication 1,
**caractérisé**
**en ce que** dans le mode de fonctionnement en démarrage, on décale la commutation du côté potentiel élevé de l'enroulement de phase (u, v, w) respectif à la commutation du côté potentiel bas de cet enroulement de phase (u, v, w), d'une valeur angulaire (α) de 15°, 30°, 45° ou 60°.

3. Dispositif de commande (1) pour commander un moteur à courant continu (2), sans balais, à trois phases, comprenant un onduleur (8) monté entre un potentiel élevé (16) et un potentiel bas (17) d'une source de tension (9) et comportant un circuit en pont à trois branches de pont (13, 14, 15) dans chacune desquelles sont montés en série un commutateur à semi-conducteur (18) côté potentiel élevé, menant au potentiel élevé (16), et un commutateur à semi-conducteur (19) côté potentiel bas, menant au potentiel bas (17), le dispositif comprenant également un microcontrôleur (10) configuré pour que lors du fonctionnement du moteur, on ait toujours deux enroulements de phase (u, v, w) qui sont alimentés en courant, et que le moteur à courant continu (2) fonctionne avec une commutation normale lorsque la vitesse de rotation (n) est supérieure ou égale à une vitesse de rotation minimum (nₘᵢₙ), dispositif
- dans lequel lors de ce mode de fonctionnement du moteur avec une commutation normale, il se produit, sur un cycle de 360°, pour chaque branche de pont (13, 14, 15) avec l'enroulement de phase (u, v, w) associé, une liaison électrique avec le côté de potentiel élevé (16) pour 120°, suivi d'un angle de 60° sans liaison électrique (16), suivi d'un angle de 120° avec une liaison électrique au côté de potentiel bas (17), et suivi d'un cycle partiel de 60° sans liaison électrique, et d'après lequel pendant l'angle de 120° de la liaison électrique avec le côté de potentiel élevé (16) de l'un des enroulements de phase (u, v, w), l'on a successivement pour à chaque fois un angle de 60°, une liaison électrique avec le côté de potentiel bas (17), des autres branches de pont (13, 14, 15) des autres enroulements de phase (u, v, w),
**caractérisé**
**en ce que** le microcontrôleur (10) est par ailleurs configuré pour, par rapport à la commutation normale, dans le mode de fonctionnement en démarrage jusqu'à la vitesse de rotation minimum (nₘᵢₙ) du moteur à courant continu (2), produire pour tous les enroulements de phase (u, v, w), lors d'une liaison d'un commutateur à semi-conducteur (18) avec le côté potentiel élevé (16), un décalage d'une commutation côté potentiel élevé d'un enroulement de phase (u, v, w) à une commutation côté potentiel bas de cet enroulement de phase (u, v, w) lors d'une liaison d'un commutateur à semi-conducteur (19) avec le côté potentiel bas (17), d'une valeur angulaire (α) supérieure à 0° et inférieure ou égale à 60° entre le début de la commutation du côté du potentiel élevé (16) et le début de la commutation du côté du potentiel bas (17) de l'enroulement de phase (u, v, w) respectif.
